(19) Europäisches Patentamt
European Patent Office
Office européen des brevets

(11) **EP 4 465 740 A1**

(12) **EUROPEAN PATENT APPLICATION**
published in accordance with Art. 153(4) EPC

(43) Date of publication:
**20.11.2024 Bulletin 2024/47**

(21) Application number: **22918357.9**

(22) Date of filing: **09.12.2022**

(51) International Patent Classification (IPC):
**H04W 74/08** *(2024.01)*

(52) Cooperative Patent Classification (CPC):
**H04W 74/08**

(86) International application number:
**PCT/CN2022/138184**

(87) International publication number:
**WO 2023/130907 (13.07.2023 Gazette 2023/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.01.2022 CN 202210023813
14.07.2022 CN 202210826254
04.08.2022 CN 202210934794**

(71) Applicant: **Datang Mobile Communications
Equipment Co., Ltd.
Beijing 100085 (CN)**

(72) Inventors:
• **WANG, Junwei
Beijing 100085 (CN)**
• **XING, Yanping
Beijing 100085 (CN)**

(74) Representative: **Studio Torta S.p.A.
Via Viotti, 9
10121 Torino (IT)**

(54) **METHOD, APPARATUS, AND DEVICE FOR DETERMINING AVAILABLE TIME LENGTH OF DATA COMMUNICATION, AND MEDIUM**

(57) The present disclosure provides a method and an apparatus for determining an available duration of data communication, a device, and a medium, and the method includes: receiving a first message, the first message including channel occupy time COT information of an unlicensed spectrum, and the COT information including COT remaining duration information and/or application beam indication information; and determining, according to the COT remaining duration information, the available duration for data reception or transmission. In the present disclosure, a transmitting device may determine the COT remaining duration information and/or the application beam indication information through an LBT process and indicate the COT remaining duration information and/or the application beam indication information to a receiving device through the first message, so that the receiving device can accurately determine a maximum indicated COT remaining duration and/or a communication beam, thereby solving a problem that an existing method of determining an available duration for data communication cannot be applied to a high-frequency band, and enabling high-frequency communication between communication devices.

```
┌─────────────────────────────────────────────────────────────────┐
│ Receiving a first message transmitted by a transmitting device,   │  S210
│ the first message including channel occupy time COT information    │
│ of an unlicensed spectrum, and the COT information including COT   │
│ remaining duration information and/or application beam indication  │
│ information                                                        │
└─────────────────────────────────────────────────────────────────┘
                               │
                               ▼
┌─────────────────────────────────────────────────────────────────┐
│ Determining, according to the COT remaining duration information,  │  S220
│ the available duration for data reception or transmission          │
└─────────────────────────────────────────────────────────────────┘
```

FIG. 2

**Description**

This disclosure claims priority to Chinese patent application No. 2022100238137, filed with the China National Intellectual Property Administration on January 10, 2022, and entitled "METHOD AND APPARATUS FOR DETERMINING AVAILABLE DURATION OF DATA COMMUNICATION, DEVICE, AND MEDIUM"; Chinese patent application No. 2022108262543, filed with the China National Intellectual Property Administration on July 14, 2022, and entitled "METHOD AND APPARATUS FOR DETERMINING AVAILABLE DURATION OF DATA COMMUNICATION, DEVICE, AND MEDIUM"; and Chinese patent application No. 2022109347943, filed with the China National Intellectual Property Administration on August 04, 2022, and entitled "METHOD AND APPARATUS FOR DETERMINING AVAILABLE DURATION OF DATA COMMUNICATION, DEVICE, AND MEDIUM", the entire contents of which are incorporated by reference in this disclosure.

**TECHNICAL FIELD**

The present disclosure relates to the field of communication technology, and in particular, to a method and an apparatus for determining an available duration of data communication, a device, and a medium.

**BACKGROUND**

With the development of communication technologies, a network device in a communication system can utilize a licensed spectrum and an unlicensed spectrum at the same time to provide a communication service for a terminal device. In the R16 version of New Radio (New Radio, NR), a communication method on an unlicensed spectrum follows a listen before talk (Listen Before Talk, LBT) rule, i.e., before transmitting data, a transmitting device (e.g., a network device/a terminal device) needs to listen to a channel on an unlicensed spectrum, and if it is shown that the channel is idle, data transmission can be performed through the channel on the unlicensed spectrum, while if the channel is busy, data transmission cannot be performed through the channel on the unlicensed spectrum.
In a NR technology of 5G, a network device and a terminal device may communicate in a plurality of frequency bands, where high-frequency communication as well as low-frequency communication are included.
However, due to difference in frequency ranges between the high-frequency communication and the low-frequency communication, a remaining duration indicating method of channel occupy time (Channel Occupy Time, COT) on low frequencies in the prior art cannot fully satisfy demands for COT remaining indication on high frequencies, therefore, how to perform COT remaining indication in high-frequency communication becomes a problem to be solved.
The aforementioned information disclosed in the background technology is intended only to enhance understanding of the background of the present disclosure, and thus may contain information which does not form a part of the prior art known to those of ordinary skill in the art.

**SUMMARY**

The present disclosure provides a method and an apparatus for determining an available duration of data communication, a device, and a medium, to solve a problem of the prior art.
In a first aspect, the present disclosure provides a method for determining an available duration of data communication, applied to a receiving device, and in some embodiments, including:

receiving a first message, the first message including channel occupy time COT information of an unlicensed spectrum, and the COT information including COT remaining duration information and/or application beam indication information; and
determining, according to the COT remaining duration information, the available duration for data reception or transmission.

In some embodiments, the COT remaining duration information is less than or equal to a maximum indicated value, and the maximum indicated value being an indicated symbol value; and
the determining, according to the COT remaining duration information, the available duration for data reception or transmission includes:

determining, according to a conversion relationship between an indicated value and a COT remaining duration, a first COT remaining duration corresponding to the maximum indicated value; and
determining that the available duration for data reception or transmission is less than or equal to the first COT remaining duration.

In some embodiments, the maximum indicated value includes a maximum symbol value;

where in a case that a maximum SCS is 960 KHz, a maximum value of the maximum symbol value is 4480;
in a case that the maximum SCS is 480 KHz, the maximum value of the maximum symbol value is 2240; and
in a case that the maximum SCS is 120 KHz, the maximum value of the maximum symbol value is 560.

In some embodiments, the COT remaining duration information includes a first indicated value, the first indicated value including any one of an indicated symbol value, a symbol value contained in a half slot, or a symbol value contained in a slot;
the determining, according to the COT remaining duration information, the available duration for data reception or transmission includes:

determining, according to the first indicated value and a scale factor, a second indicated value;
determining, according to the second indicated value, and a conversion relationship between an indicated value and a COT remaining duration, a second COT remaining duration corresponding to the second indicated value; and
determining that the available duration for data reception or transmission is less than or equal to the second COT remaining duration.

In some embodiments, the determining, according to the first indicated value and the scale factor, the second indicated value includes:
determining a product of the first indicated value and the scale factor to be the second indicated value.
In some embodiments, in a case that the first indicated value is the indicated symbol value, the scale factor is determined according to a maximum COT length, a sub-carrier spacing SCS, a reference SCS index, and a reference maximum channel occupy time.
In some embodiments, the scale factor is calculated by a following formula:

$$scale\_factor = 2^{\mu - \mu 0} * \frac{T\max\_\cot}{ref\_\cot}$$

where *scale_factor* represents the scale factor, $T\max\_\cot$ represents the maximum COT length, $\mu$ represents the sub-carrier spacing SCS, $\mu 0$ represents the reference SCS index, and *ref_cot* represents the reference maximum channel occupy time.
In some embodiments, the scale factor is determined based on a preset rule;
the preset rules including that:

in a case that the first indicated value is the symbol value contained in the half slot, the scale factor is a first preset value;
or,
in a case that the first indicated value is the symbol value contained in the slot, the scale factor is a second preset value;
where the second preset value is twice the second preset value.

In some embodiments, the following is further included:
determining, according to the application beam indication information, an applied beam corresponding to the COT remaining duration information.
In some embodiments, the application beam indication information includes beam information and a beam number, the beam information and the beam number being configured by the receiving device, the method further including:

if an indicated value corresponding to a target beam is a first value, determining that the COT remaining duration information is not applied to the target beam; and
if the indicated value corresponding to the target beam is a second value, determining that the COT remaining duration information is applied to the target beam.

In some embodiments, the following is further included:

receiving PUSCH scheduling information transmitted by a transmitting device;
determining, according to the PUSCH scheduling information, one or more of the following:
transmitting time of a PUSCH, beam information of the PUSCH, and a first LBT type of the PUSCH.

In some embodiments, the PUSCH scheduling information includes grant information for dynamic scheduling of the transmitting device and/or grant information of a higher level signaling configured grant.

In some embodiments, converting a first LBT type to a second LBT type further includes:

in a case that a first condition is satisfied, converting the first LBT type to the second LBT type;
where the first condition includes one or more of the following:

transmitting time of the PUSCH scheduling information is within an available duration range corresponding to the COT remaining duration information;
beam information in the PUSCH scheduling information contains COT beam information; and
the PUSCH scheduling information contains COT-related information.

In some embodiments, the beam information in the PUSCH scheduling information including the COT beam information or the PUSCH scheduling information including the COT-related information is determined in any one of following ways:

configured via higher level signaling;
indicated via DCI; and
the receiving device assumes that the beam information in the PUSCH scheduling information includes the COT beam information or the PUSCH scheduling information includes the COT-related information.

In some embodiments, the second LBT type includes a LBT type-2 or a LBT type-3.

In some embodiments, the following is further included:
in a case that receiving time of the COT information satisfies a second condition, converting the first LBT type to the second LBT type; wherein the second condition includes: the receiving time of the COT information is not earlier than receiving time of the PUSCH scheduling information, or the receiving time of the PUSCH scheduling information is not later than the receiving time of the COT information.

In a second aspect, the present disclosure provides a method for determining an available duration of data communication, applied to a transmitting device, including:

determining channel occupy time COT information of an unlicensed spectrum, the COT information including COT remaining duration information and/or application beam indication information; and
transmitting a first message containing the COT information to a receiving device.

In some embodiments, the application beam indication information includes beam information and a beam number, the beam information and the beam number being configured by the transmitting device, and the method further including:

if an indicated value corresponding to a target beam is a first value, determining that the COT remaining duration information is not applied to the target beam; and
if the indicated value corresponding to the target beam is a second value, determining that the COT remaining duration information is applied to the target beam.

In some embodiments, the COT remaining duration information is less than or equal to a maximum indicated value, the maximum indicated value being an indicated symbol value; and
the maximum indicated value is determined according to a maximum COT length and a sub-carrier spacing SCS.

In some embodiments, the maximum indicated value is further determined according to a reference maximum indicated range, a reference SCS index, and a reference maximum channel occupy time.

In some embodiments, the maximum indicated value is calculated by a following formula:

$$Max_{value} = ref\_max\_value * 2^{\mu - \mu 0} * \frac{T\max\_\cot}{ref\_\cot}$$

where $Max_{value}$ represents the maximum indicated value, $T\max\_\cot$ represents the maximum COT length, $\mu$ represents the sub-carrier spacing SCS, $ref\_max\_value$ represents the reference maximum indicated range, $\mu 0$ represents the reference SCS index, and $ref\_\cot$ represents the reference maximum channel occupy time.

In some embodiments, the maximum indicated value is further determined according to a number of slots contained in each subframe and a number of symbols contained in one slot.

In some embodiments, the maximum indicated value is calculated by a following formula:

$$Max_{value} = N_{slot}^{subframe,\mu} * T\max\_\cot * N_{symb}^{slot}$$

where $Max_{value}$ represents the maximum indicated value, $T\max\_\cot$ represents the maximum COT length, $\mu$ represents the sub-carrier spacing SCS, $N_{slot}^{subframe,\mu}$ represents the number of slots contained in each subframe, and $N_{symb}^{slot}$ represents the number of symbols contained in one slot.

In some embodiments, the COT remaining duration information includes a first indicated value; and the first indicated value includes any one of an indicated symbol value, a symbol value contained in a half slot, or a symbol value contained in a slot.

In some embodiments, the maximum indicated value includes a maximum symbol value;

where in a case that a maximum SCS is 960 KHz, a maximum value of the maximum symbol value is 4480;
in a case that the maximum SCS is 480 KHz, the maximum value of the maximum symbol value is 2240; and
in a case that the maximum SCS is 120 KHz, the maximum value of the maximum symbol value is 560.

In some embodiments, the following is further included:
transmitting PUSCH scheduling information to the receiving device, where the PUSCH scheduling information is used for instructing the receiving device to determine, according to the PUSCH scheduling information, one or more of the following: transmitting time of a PUSCH, beam information of the PUSCH, and a first LBT type of the PUSCH.

In some embodiments, the PUSCH scheduling information includes grant information for dynamic scheduling of the transmitting device and/or grant information of a higher level signaling configured grant.

In a third aspect, the present disclosure provides a receiving device, including a memory, a transceiver, and a processor:
the memory is configured to store a computer program; the transceiver is configured to transmit and receive data under control of the processor; and the processor is configured to read the computer program in the memory and perform following operations:

receiving a first message, the first message including channel occupy time COT information of an unlicensed spectrum, and the COT information including COT remaining duration information and/or application beam indication information; and
determining, according to the COT remaining duration information, the available duration for data reception or transmission.

In a fourth aspect, the present disclosure provides a transmitting device, including a memory, a transceiver, and a processor:
the memory is configured to store a computer program; the transceiver is configured to transmit and receive data under control of the processor; and the processor is configured to read the computer program in the memory and execute following operations:

determining channel occupy time COT information of an unlicensed spectrum, the COT information including COT remaining duration information and/or application beam indication information; and
transmitting a first message containing the COT information to a receiving device.

In a fifth aspect, the present disclosure provides an apparatus for determining an available duration of data communication, applied to a receiving device, including:

a receiving module, configured to receive a first message, the first message including channel occupy time COT information of an unlicensed spectrum, and the COT information including COT remaining duration information and/or application beam indication information; and
a determining module, configured to determine, according to the COT remaining duration information, the available duration for data reception or transmission.

In a sixth aspect, the present disclosure provides an apparatus for determining an available duration of data communication, applied to a transmitting device, including:

a determining module, configured to determine channel occupy time COT information of an unlicensed spectrum, the COT information including COT remaining duration information and/or application beam indication information; and

a transmitting module, configured to transmit a first message containing the COT information to a receiving device.

In a seventh aspect, the present disclosure provides a computer readable storage medium, the computer readable storage medium storing a computer executable instruction, which when executed by a processor, is used for implementing the aforementioned method for determining an available duration of data communication.

The present disclosure provides a method and an apparatus for determining an available duration of data communication, a device, and a medium, and the method includes: receiving a first message, the first message including channel occupy time COT information of an unlicensed spectrum, and the COT information including COT remaining duration information and/or application beam indication information; and determining, according to the COT remaining duration information, the available duration for data reception or transmission. In the present disclosure, a transmitting device may determine the COT remaining duration information and/or the application beam indication information through an LBT process and indicate the COT remaining duration information and/or the application beam indication information to a receiving device through the first message, so that the receiving device can accurately determine a maximum indicated COT remaining duration and/or a communication beam, thereby solving a problem that an existing method of determining an available duration for data communication cannot be applied to a high-frequency band, and enabling high-frequency communication between communication devices.

**BRIEF DESCRIPTION OF DRAWINGS**

Drawings herein are incorporated into the specification and form a part of the specification, illustrate embodiments consistent with the present disclosure, and are used in combination with the specification to explain principles of the present disclosure.

FIG. 1 is a schematic diagram of a method for determining an available duration for data communication provided by an embodiment of the present disclosure;

FIG. 2 is a schematic diagram of a method for determining an available duration for data communication provided by an embodiment of the present disclosure;

FIG. 3 is a schematic diagram of an apparatus for determining an available duration for data communication provided by an embodiment of the present disclosure;

FIG. 4 is a schematic diagram of an apparatus for determining an available duration for data communication provided by an embodiment of the present disclosure;

FIG. 5 is a structural diagram of a receiving device provided by an embodiment of the present disclosure; and

FIG. 6 is a structural diagram of a transmitting device provided by an embodiment of the present disclosure.

Specific embodiments of the present disclosure have been shown by means of the aforementioned drawings, which will be described in greater detail in the following. These drawings and textual descriptions are not intended to limit the scope of concepts of the present disclosure in any way, but rather to illustrate the concepts of the present disclosure for those skilled in the art by reference to particular embodiments.

**DESCRIPTION OF EMBODIMENTS**

In order to make purposes, technical solutions and advantages of the embodiments of the present disclosure clearer, the technical solutions in the embodiments of the present disclosure will be described clearly and completely in the following in combination with the drawings in the embodiments of the present disclosure, and it is clear that the described embodiments are a part of the embodiments of the present disclosure, and not all of the embodiments. Based on the embodiments in the present disclosure, all other embodiments obtained by a person of ordinary skill in the art without creative labor fall within the protection scope of the present disclosure.

Terms used in the embodiments of the present disclosure are used merely for the purpose of describing particular embodiments and are not intended to limit the present disclosure. Singular forms "a" and "the" used in the embodiments of the present disclosure are also intended to include plural forms, unless the context clearly indicates otherwise.

It should be understood that terms "and/or" used herein is merely a description of an association relationship of associated objects, indicating that three relationships may exist, for example, A and/or B may be expressed as A alone, both A and B, and B alone. In addition, characters "j" herein generally indicates that the associated objects before and after are in an "alternative" relationship.

Depending on the context, words "if" and "in a case that" used herein may be interpreted as "when......" or "while......" or "in response to determining that" or "in response to detecting that". Similarly, depending on the context, phrases "if it is determined that" or "if it is detected that (the stated condition or event)" may be interpreted as "when it is determined that" or "in response to determining that" or "when it is detected that (the stated condition or event)" or "in response to detecting that (the stated condition or event)".

It should also be noted that terms "include", "contain" or any other variant thereof are intended to cover non-exclusive inclusion, so that a commodity or a system including a set of elements includes not only those elements but also other elements that are not explicitly listed or that are inherent to such a commodity or system. Without further limitation, the fact that an element is limited by a phrase "include a......" does not preclude the existence of additional identical elements in a commodity or a system including the element.

With the development of communication technologies, a network device in a communication system can utilize a licensed spectrum and an unlicensed spectrum at the same time to provide a communication service for a terminal device. In the R16 version of New Radio (New Radio, NR), a communication method on an unlicensed spectrum follows a listen before talk (Listen Before Talk, LBT) rule, i.e., before transmitting data, a transmitting device (e.g., a network device/a terminal device) needs to listen to a channel on an unlicensed spectrum, and if it is shown that the channel is idle, data transmission can be performed through the channel on the unlicensed spectrum, while if the channel is busy, data transmission cannot be performed through the channel on the unlicensed spectrum.

The transmitting device acquires channel occupy time (Channel Occupy Time, COT) for performing data transmission after each LBT process and indicates the channel occupy time to a corresponding receiving device via a communication message to indicate remaining channel occupy time, i.e., a COT remaining duration that the receiving device can use for performing data transmission.

In the NR technology of 5G, a network device and a terminal device can communicate in a plurality of frequency bands, e.g., frequency range 1 (Frequency Range, FR1), frequency range 2_1 (FR2_1), frequency range 2_2 (FR2_2), etc., where FR1 specifically refers to 410 MHz to 7.125 GHz, FR2_1 specifically refers to 24.25 GHz to 52.6 GHz, and FR2_2 specifically refers to 52.6 GHz to 71 GHz. Among the aforementioned plurality of frequency ranges, a frequency range greater than 52.6 GHz is referred to as a high frequency, e.g., FR2_2 is also referred to as a high-frequency band; and a frequency range less than 52.6 GHz is referred to as a low frequency, e.g., FR1, FR2_1 are also referred to as low-frequency bands. When the transmitting device passes the LBT, maximum COT of low frequency communication is 10ms and maximum COT of high frequency communication is 5ms.

Although higher communication frequencies can bring advantages of a greater bandwidth, higher frequencies have a greater Doppler frequency bias with a greater phase noise generated, in order to alleviate effects of Doppler and the phase noise brought by high frequencies, a sub-carrier spacing (Sub-Carrier Spacing, SCS) used for high-frequency communication is higher than that used for low-frequency communication.

For example, an SCS value for low frequency communication is, for example, 15 KHz, 30 KHz, 60 KHz, 120 KHz, etc., while an SCS value for high frequency communication is, for example, 240 KHz, 480 KHz, 960 KHz, etc. Table 1 below shows specific values of frame structure parameters:

Table 1

| $\mu$ | $\Delta f = 2^{\mu} \cdot 15$ [kHz] (SCS) | The number of symbols contained in one slot | The number of slots included in one 10ms radio frame | The number of slots contained in each 1ms subframe | Note |
|---|---|---|---|---|---|
| 0 | 15 | 14 | 10 | 1 | |
| 1 | 30 | 14 | 20 | 2 | |
| 2 | 60 | 14 | 40 | 4 | |
| 3 | 120 | 14 | 80 | 8 | |
| 4 | 240 | 14 | 160 | 16 | Not used for data/control channels |
| 5 | 480 | 14 | 320 | 32 | New introduction for high frequencies |
| 6 | 960 | 14 | 640 | 64 | New introduction for high frequencies |

Referring to Table 1 above, the above table describes the number of slots included in one 10ms radio frame( $N_{slot}^{frame, \mu}$ ), the number of slots contained in each 1ms subframe ( $N_{slot}^{subframe, \mu}$ ) and the number of symbols contained in one slot ( $N_{symb}^{slot}$ ) for different SCSs.

For example, when $\mu$ = 3, each subframe includes 8 slots and each slot includes 14 symbols, i.e., each subframe contains 8*14=112 symbols.

For another example, when $\mu = 5$, each subframe includes 32 slots and each slot includes 14 symbols, i.e., each subframe contains 32*14=448 symbols.

For another example, when $\mu = 6$, each subframe includes 64 slots and each slot includes 14 symbols, i.e., each subframe contains 64*14=896 symbols.

In operations on an unlicensed spectrum of R16, for low-frequency communication, a method of indicating COT remains is as follows:

1: an upper layer (e.g., an MAC layer, an RRC layer, etc.) configures an indicated number of a plurality of COT remains (up to 64), and the indicated granularity is at a symbol level (an indicated value of the COT remains co-DurationList is configured to a maximum of 1120 symbols), indicating that a COT remaining duration is: 0 to 10 ms; an indicating method in the standard is: CO-Duration-r16 : : = INTEGER (0..1120); INTEGER indicates an integer, 1120 indicates a maximum value of the CO-Duration indication, unit thereof is symbol;

2: the aforementioned configuration index is indicated by downlink control information (Downlink Control Information, DCI), and a relevant index may be any of the aforementioned 64 values.

However, due to difference in frequency ranges between high-frequency communication and low-frequency communication, the prior art cannot fully satisfy the need for high-frequency COT remain indication, i.e., the method of COT remain indication in low-frequency communication cannot be applied to high-frequency communication for following reasons:

problem 1: a maximum SCS introduced in high-frequency communication is 960KHz, a maximum number of symbols stipulated according to a relevant protocol in the current low-frequency communication is 1120, and according to a conversion relationship between the number of symbols and high-frequency COT remain indication, i.e., COT remaining duration = the number of symbols/the number of symbols contained in one slot/the number of slots contained in each 1ms subframe, for 960KHz, a maximum COT remaining duration that can be indicated is (1120/14)/64= 1.25ms, i.e., the maximum COT remaining duration that can be indicated is 1.25ms, and 1.25ms<5ms, thus, the existing low-frequency method for determining an available duration for data communication cannot satisfy the need to achieve a maximum indicated COT remaining duration of 5ms in high-frequency communication.

problem 2: introduction of directional LBT: in high-frequency communication, one channel occupy (Channel Occupy) may contain a plurality of different beams in time-division multiplexing (Time-Division Multiplexing, TDM)/spatial division multiplexing, and according to the existing low-frequency method for determining an available duration for data communication, a receiving device is unable to know a COT remaining duration is specifically applied to which beam, and thus is unable to know which beam is used for data communication.

The present disclosure provides a method for determining an available duration for data communication, and is intended to solve the above technical problem in the prior art. The main concept of the present disclosure is as follows:

with regard to the problem 1, following two candidate methods may be used;

(1) by expanding an indicated range, e.g., expanding an indicated maximum number of symbols from 1120 to 4480, thereby satisfying an indication requirement of a maximum indicated COT remaining duration corresponding to a maximum SCS (e.g., SCS = 960 KHz);

(2) by increasing an indicated granularity, for example, communication devices agree in advance, through the communication specification, that the indicated value includes any one of an indicated symbol value, a symbol value contained in a half slot, or a symbol value contained in a slot, after receiving the indicated value transmit by a transmitting device, a receiving device performs processing on the indicated value to obtain an application value which is greater than the indicated value, and then determines an indicated COT remaining duration based on the application value, thereby satisfying the indication requirement of the maximum indicated COT remaining duration corresponding to the maximum SCS;

with regard to problem 2: a transmitting device may add COT remain indication respectively corresponding to a plurality of beams, i.e., applied beam information corresponding to the COT remain indication, so that a receiving device can know the COT remaining duration is specifically applied to which beams, and thus know which beams are specifically used for data communication.

It can be understood that processing steps of the method for determining an available duration for data communication in the present disclosure may be implemented by a terminal device or a network device.

The network device may be a base station, and may specifically be a base transceiver station (Base Transceiver Station, BTS) and/or a base station controller in global system of mobile communication (Global System of Mobile communication, abbreviate as GSM) or code division multiple access (Code Division Multiple Access, abbreviate as CDMA), or a NodeB (NodeB, abbreviate as NB) and/or a radio network controller (Radio Network Controller, abbreviate as RNC) in wideband code division multiple access (Wideband Code Division Multiple Access, abbreviate as WCDMA), or an evolutional Node B (Evolutional NodeB, abbreviate as eNB or eNodeB) in long term evolution (Long Term Evolution, abbreviate as LTE), or a relay station or an access point, or a gNB (gNB) in a future 5G network, etc., which is not limited in the embodiments of the present disclosure.

The terminal device may be a wireless terminal or a wired terminal. The wireless terminal may refer to a device which provides voice and/or other service data connectivity to a user, a handheld device with a wireless connection function, or other processing devices connected to a wireless modem. The wireless terminal may communicate with one or more core network devices via a radio access network (Radio Access Network, abbreviate as RAN), and the wireless terminal may be a mobile terminal, e.g., a mobile phone (or referred to as "cellular" phone) and a computer having a mobile terminal, e.g., may be a portable, pocket-sized, handheld, computer-built, or vehicle-mounted mobile device, which exchange language and/or data with a wireless access network. For another example, the wireless terminal may be a personal communication service (Personal Communication Service, abbreviate as PCS) telephone, a cordless telephone, a session initiation protocol (Session Initiation Protocol, abbreviate as SIP) telephone, a wireless local loop (Wireless Local Loop, abbreviate as WLL) station, a personal digital assistant (Personal Digital Assistant, abbreviate as PDA), or other devices. The wireless terminal may also be referred to as a system, a subscriber unit (Subscriber Unit), a subscriber station (Subscriber Station), a mobile station (Mobile Station), a mobile (Mobile), a remote station (Remote Station), a remote terminal (Remote Terminal), an access terminal (Access Terminal), an user terminal (User Terminal), a user agent (User Agent), a user device or user equipment (User Device or User Equipment), which is not limited herein. Optionally, the above terminal device may also be a device such as a smart watch, a tablet computer, etc.

The technical solutions of the present disclosure and how the technical solutions of the present disclosure solve the aforementioned technical problems are described in detail below in specific embodiments. These following specific embodiments may be combined with each other, and same or similar concepts or processes may not be repeated in certain embodiments. The embodiments of the present disclosure will be described below in combination with the drawings.

In some embodiments, a method for determining an available duration for data communication is provided, which is applied to a transmitting device. The transmitting device may specifically be a network device or a terminal device, and correspondingly, a receiving device is a terminal device or a network device, the transmitting device being different from the receiving device.

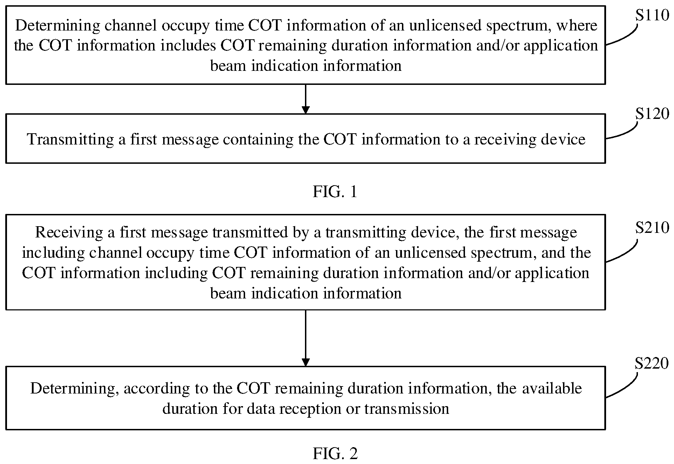

FIG. 1 is a schematic diagram of a method for determining an available duration for data communication provided by an embodiment of the present disclosure, and as shown in FIG. 1, the method mainly include following steps:

S 110, determining channel occupy time COT information of an unlicensed spectrum, where the COT information includes COT remaining duration information and/or application beam indication information;

Specifically, a transmitting device may acquire the COT information of the unlicensed spectrum through an LBT process, which may be implemented by an existing LBT method, e.g., an LBT type-1 method or an LBT type-2 method.

The COT information acquired by the transmitting device includes COT remaining duration information and/or application beam indication information, the COT remaining duration information being used for indicating a maximum indicated COT remaining duration during a high-frequency communication process; the applied beam information is used for indicating an applied beam corresponding to the maximum indicated COT remaining duration.

The COT remaining duration information is indicated by expanding an indicated range or increasing an indicated granularity, so that the COT remaining duration information can be used for indicating a longer COT remaining duration, which thereby can solve the problem 1 existing in the prior art.

In addition, the transmitting device may add COT remain indication respectively corresponding to a plurality of beams, i.e., applied beam information corresponding to the COT remain indication, so that the receiving device can know the COT remaining duration is specifically applied to which beams, and thus know which beams are specifically used for data communication, which thereby can solve the problem 2 existing in the prior art.

Optionally, for a multi-beam high-frequency communication scenario, the transmitting device may add COT remaining duration indication of one or more beams, the indication information being indicated by upper layer signaling, and 1-bit indication may be used for each indicated beam to indicate whether the COT remain indication can be applied to the beam.

For example, 0 indicates that the COT remain indication cannot be applied to the beam (indicating that a COT remain of an related beam is 0 or indicating that an LBT for a beam in that direction has failed, i.e., no COT has been acquired), and 1 means that the COT remain indication can be applied to the beam (i.e., indicating that a COT remaining value of the related beam is the same as an indicated value).

**EP 4 465 740 A1**

S120, transmitting a first message containing the COT information to the receiving device.

After acquiring the COT information, the transmitting device transmits the COT information to the receiving device through the first message, where when the transmitting device is a network device, the first message may be, for example, a DCI message, etc., so that the receiving device may determine, based on the COT information in the first message, a maximum indicated COT remaining duration and/or a communication beam.

The present embodiment provides a method for determining an available duration for data communication, which is applied to a high frequency band, the transmitting device may acquire the COT remaining duration information and/or the application beam indication information through the LBT process and indicate the COT remaining duration information and/or the application beam indication information to the receiving device through the first message, so that the receiving device can accurately determine the maximum indicated COT remaining duration and/or the communication beam, thereby solving the problem that the existing method of determining an available duration for data communication cannot be applied to a high-frequency band, and enabling high-frequency communication between communication devices.

In some embodiments, the COT remaining duration information is less than or equal to a maximum indicated value, and the maximum indicated value being an indicated symbol value; and the maximum indicated value is related to a maximum COT length and a sub-carrier spacing SCS. The maximum COT length is a maximum indicated COT remaining duration which needs to be achieved in high-frequency communication, i.e., the maximum COT length is 5 ms.

Optionally, when a maximum SCS is 960 KHz, a maximum value of the maximum symbol value is 4480; when the maximum SCS is 480 KHz, the maximum value of the maximum symbol value is 2240; and when the maximum SCS is 120 KHz, the maximum value of the maximum symbol value is 560.

Specifically, according to a conversion relationship between the number of symbols and high-frequency COT remain indication, i.e., COT remaining duration = the number of symbols/the number of symbols contained in one slot/the number of slots contained in each 1ms subframe, when a maximum symbol value indicated by the transmitting device is 4480, for 960 KHz, a maximum COT remaining duration that can be indicated is (4480/14)/64=5 ms, i.e., the maximum COT remaining duration that can be indicated is 5ms, thus, the need to achieve a maximum indicated COT remaining duration of 5ms in high-frequency communication can be achieved.

In some embodiments, the maximum indicated value is also related to a reference maximum indicated range, a reference SCS index, and a reference maximum channel occupy time.

Specifically, the maximum indicated value is calculated by a following formula:

$$Max_{value} = ref\_max\_value * 2^{\mu - \mu 0} * \frac{T\max\_cot}{ref\_cot}$$

where $Max_{value}$ represents the maximum indicated value, $T\max\_cot$ represents the maximum COT length, $\mu$ represents the sub-carrier spacing SCS, $ref\_max\_value$ represents the reference maximum indicated range, $\mu 0$ represents the reference SCS index, and $ref\_cot$ represents the reference maximum channel occupy time.

Specifically, for high-frequency communication, the maximum COT length $T$ max_cot=5$ms$ , $\mu$ represents a corresponding sub-carrier spacing SCS, e.g., $\mu$=5 corresponds to SCS=480KHz, $\mu$=6 corresponds to SCS=960KHz, the reference maximum indicated range $ref\_max\_value$=1120 , the reference SCS index $\mu$0=3 (corresponds to SCS=120KHz), and the reference maximum channel occupy time $ref\_$cot $=10ms$ , i.e., the above formula can be specifically expressed as:

$$Max_{value} = 1120 * 2^{\mu - 3} * \frac{5}{10}$$

According to the above formula, combined with Table 1, the following can be obtained:

when $\mu$ = 5, a result of the above formula is: Max_value = 2240
when $\mu$ = 6, the result of the above formula is: Max_value = 4480
when $\mu$ = 3, the result of the above formula is: Max_value = 560

Thus, based on the above formula, the transmitting device can determine the maximum indicated value for indicating a longer COT remaining duration, i.e., solving the problem 1 existing in the prior art by expanding the indicated range.

It can be understood that, in a practical application, the transmitting device may use the above formula for calculation, or may directly use the above result, for example: CO-Duration :: = INTEGER (0.. 4480); or CO-Duration :: = INTEGER (0.. 2240); or CO-Duration :: = INTEGER (0.. 560).

In some embodiments, the maximum indicated value is also related to the number of slots contained in each subframe and the number of symbols contained in one slot.

Specifically, the maximum indicated value is calculated by a following formula:

$$Max_{value} = N_{slot}^{subframe,\mu} * T\max\_\cot * N_{symb}^{slot}$$

where $Max_{value}$ represents the maximum indicated value, $T\max\_\cot$ represents the maximum COT length, $\mu$ represents the sub-carrier spacing SCS, $N_{slot}^{subframe,\mu}$ represents the number of slots contained in each subframe, and $N_{symb}^{slot}$ represents the number of symbols contained in one slot.

Specifically, for high-frequency communication, the maximum COT length $T\max\_cot=5ms$, $\mu$ represents a corresponding sub-carrier spacing SCS, e.g., $\mu$=5 corresponds to SCS=480KHz, $\mu$=6 corresponds to SCS=960KHz, and $\mu$=3 corresponds to SCS=120KHz, $N_{slot}^{subframe,\mu}$ represents the number of slots contained in each 1ms subframe corresponding to an SCS, and $N_{symb}^{slot}$ represents the number of symbols contained in one slot, i.e., the above formula can be specifically expressed as:

$$Max_{value} = N_{slot}^{subframe,\mu} * 5 * N_{symb}^{slot}$$

According to the above formula, combined with Table 1, the following can be obtained:

when $\mu$ = 5, the result of the above formula is: Max_value = 2240
when $\mu$ = 6, the result of the above formula is: Max_value = 4480
when $\mu$ = 3, the result of the above formula is: Max_value = 560

Thus, based on the above formula, the transmitting device can determine the maximum indicated value for indicating a longer COT remaining duration, i.e., solving the problem 1 existing in the prior art by expanding the indicated range.

It can be understood that, in a practical application, the transmitting device may use the above formula for calculation, or may directly use the above result, for example: CO-Duration :: = INTEGER (0.. 4480); or CO-Duration :: = INTEGER (0.. 2240); or CO-Duration :: = INTEGER (0.. 560).

In some embodiments, the COT remaining duration information includes a first indicated value; and the first indicated value includes any one of the indicated symbol value, a symbol value contained in a half slot, or a symbol value contained in a slot.

Specifically, the transmitting device may indicate a COT duration in a way of transmitting any one of the indicated symbol value, the symbol value contained in a half slot, or the symbol value contained in a slot, and correspondingly, the receiving device may perform, according to an advance agreement, for example, a communication specification, processing on the first indicated value, thereby obtaining a corresponding application value. Thus, the COT remaining duration information can be used for indicating a longer COT remaining duration, which thereby can solve the problem 1 existing in the prior art.

In some embodiments, the following is further included:
transmitting PUSCH scheduling information to the receiving device, the PUSCH scheduling information is used for instructing the receiving device to determine, according to the PUSCH scheduling information, one or more of the following: transmitting time of a PUSCH, beam information of the PUSCH, and a first LBT type of the PUSCH.

In some embodiments, the PUSCH scheduling information includes grant information for dynamic scheduling of the transmitting device and/or grant information of a higher level signaling configured grant.

In some embodiments, a method for determining an available duration for data communication is provided, which is applied to a receiving device.

FIG. 2 is a schematic diagram of a method for determining an available duration for data communication provided by an embodiment of the present disclosure, and as shown in FIG. 2, the method mainly include following steps:

S210, receiving a first message transmitted by a transmitting device, the first message including channel occupy time COT information of an unlicensed spectrum, and the COT information including COT remaining duration information and/or application beam indication information;
Optionally, the COT remaining duration information is less than or equal to a maximum indicated value, i.e., the receiving device receives a value indicated by the transmitting device by expanding an indicated range.

Optionally, the COT remaining duration information includes a first indicated value; and the first indicated value includes any one of an indicated symbol value, a symbol value contained in a half slot, or a symbol value contained in a slot, i.e., the receiving device receives a value indicated by the transmitting device by increasing an indicated granularity.

S220, determining, according to the COT remaining duration information, the available duration for data reception or transmission.

When the COT remaining duration information is less than or equal to the maximum indicated value, the determining, according to the COT remaining duration information, the available duration for data reception or transmission includes: S221, determining, according to a conversion relationship between an indicated value and a COT remaining duration, a first COT remaining duration corresponding to the maximum indicated value; and determining that the available duration for data reception or transmission is less than or equal to the first COT remaining duration.

In addition, when the COT remaining duration information includes the first indicated value, the determining, according to the COT remaining duration information, the available duration for data reception or transmission includes: S222, determining, according to the first indicated value and a scale factor, a second indicated value; determining, according to the second indicated value, and a conversion relationship between an indicated value and a COT remaining duration, a second COT remaining duration corresponding to the second indicated value; and determining that the available duration for data reception or transmission is less than or equal to the second COT remaining duration.

The first indicated value can be understood as an indicated value received by the receiving device, the scale factor can be understood as a multiplier by which the first indicated value is scaled, and the second indicated value is an indicated value used by the receiving device for actual application.

In some embodiments, the determining, according to the first indicated value and the scale factor, the second indicated value includes: determining a product of the first indicated value and the scale factor to be the second indicated value. Thus, the receiving device scales the first indicated value by the scale factor to obtain the second indicated value which is greater than the first indicated value, and the second indicated value can indicate a COT remaining duration which is greater than the first indicated value, and thus, the receiving device may determine a corresponding COT remaining duration based on the second indicated value.

In some embodiments, when the first indicated value is an indicated symbol value, the scale factor is related to a maximum COT length, a sub-carrier spacing SCS, a reference SCS index, and a reference maximum channel occupy time.

Optionally, the scale factor is calculated by a following formula:

$$scale\_factor = 2^{\mu-\mu0} * \frac{T\max\_\cot}{ref\_\cot}$$

where *scale_factor* represents the scale factor, $T\max\_\cot$ represents the maximum COT length, $\mu$ represents the sub-carrier spacing SCS, $\mu0$ represents the reference SCS index, and *ref_cot* represents the reference maximum channel occupy time.

Specifically, for high-frequency communication, the maximum COT length $T\max\_\cot=5ms$, $\mu$ represents a corresponding sub-carrier spacing SCS, e.g., $\mu=5$ corresponds to SCS=480KHz, $\mu=6$ corresponds to SCS=960KHz, the reference SCS index $\mu0=3$ (corresponds to SCS=120KHz), and the reference maximum channel occupy time *ref_cot* =10ms , i.e., the above formula can be specifically expressed as:

$$scale\_factor = 2^{\mu-3} * \frac{5}{10}$$

According to the above formula, combined with Table 1, the following can be obtained:

when $\mu = 5$, a result of the above formula is: scale_factor =2
when $\mu = 6$, the result of the above formula is: scale_factor = 4
when $\mu = 3$, the result of the above formula is: scale_factor=1/2

It can be understood that, in a practical application, the receiving device may use the above formula for calculation, or it may directly use a result of the above calculation to scale indication data configured by the transmitting device.

In some embodiments, the scale factor is determined and obtained based on a preset rule; where the preset rule includes:

(1) when the first indicated value is the symbol value contained in the half slot, the scale factor is a first preset value (e.g., when the half slot contains 7 symbols, the first preset value is 7; and for another example, when the half slot contains 6 symbols, the first preset value is 6);

(2) when the first indicated value is the symbol value contained in the slot, the scale factor is a second preset value (e.g., when an indicated unit is slot, and when one slot contains 14 symbols, the second preset value is 14; and for another example, when the indicated unit is slot, and when one slot contains 12 symbols, the second preset value is 12). The second preset value is twice the second preset value.

A specific value of the scale factor may also be configured and indicated by upper layer signaling of the transmitting device, which can serve a purpose of flexible indication.

Specifically, if the transmitting device and the receiving device agree in advance that the first indicated value is data in slots, the scale factor may be set to a preset value.

If it is agreed that the first indicated value is the value of symbols contained in the half slot, a value of a pre-set scale factor may be set to 7, i.e., scale_factor = 7, a maximum value transmitted by the transmitting device is the same as that in low-frequency communication, i.e., the maximum number of symbols is still 1120, and after receiving the specific value, the receiving device multiplies the specific value by 7, and obtains a corresponding second indicated value.

In the present embodiment, an advantage of setting the scale_factor to 7 is that in high-frequency communication, as an SCS increases, indicating a granularity of a half slot (a normal cyclic prefix (Cyclic prefix, CP) length is 7 symbols and an extended CP length is 6 symbols) can satisfy the need for indication and easily indicate to an integer number of slots.

In addition, if it is agreed that the first indicated value is the value of symbols contained in the slot, the value of the pre-set scale factor may be set to 14, i.e., scale_factor = 14, the maximum value transmitted by the transmitting device is the same as that in low-frequency communication, i.e., the maximum number of symbols is still 1120, and after receiving the specific value, the receiving device multiplies the specific value by 14, and obtains the corresponding second indicated value.

In the present embodiment, when the scale_factor is set to 14, it is equivalent to that an indicated granularity is slot, i.e., after receiving the first indicated value, the receiving device calculates the COT remaining duration on the basis that an agreed scale factor is a number of slots.

It can be understood that after the receiving device parses and processes indicated data, a second indicated value obtained may be understood as the number of slots, for example, if the second indicated value is 100, it may be understood that the COT remaining duration is 100 slots; or, the second indicated value obtained may be understood as a half of the number of slots, for example, if the second indicated value is 100, it may be understood that the COT remaining duration is 50 slots.

In some embodiments, the method further includes: determining, according to the application beam indication information, an applied beam corresponding to the COT remaining duration information.

Optionally, the application beam indication information includes beam information and a beam number, the beam information and the beam number being configured by a network device, and the above method further includes: if an indicated value corresponding to a target beam is a first value, determining that the COT remaining duration information is not to be applied to the target beam, and if the indicated value corresponding to the target beam is a second value, determining that the COT remaining duration information is applied to the target beam. The network device may be a transmitting device or a receiving device, the transmitting device being different from the receiving device.

Specifically, the application beam indication information may for example be indicated by a bitmap, the bitmap indicating whether related COT remaining duration indication can be applied to a related beam, e.g. the first value of 0 indicates that it cannot be applied, a second value of 1 indicates that it can be applied, or vice versa.

For example, assuming that the network device is configured with 4 beams and SCS=960KHz, COT information received by the receiving device is shown in Table 2 below:

Table 2

| Information domain | Value of number (Unit: symbol) | Note |
|---|---|---|
| COT remaining time CO-Duration | 2240 | Value calculated by a terminal: COT remain is 2240 symbols; corresponding duration is 2.5ms |
| COT remaining information of beam identification (Beam-1) | 0 | COT remain of Beam-1 is 0 symbols |
| COT remaining information of beam identification (Beam-2) | 1 | COT remain of Beam-2 is 2240 symbols |

(continued)

| Information domain | Value of number (Unit: symbol) | Note |
|---|---|---|
| COT remaining information of beam identification (Beam-3) | 1 | COT remain of Beam-3 is 2240 symbols |
| COT remaining information of beam identification (Beam-4) | 0 | COT remain of Beam-4 is 0 symbols |

As shown in Table 2 above, the receiving device receives indicated information about COT remain from the transmitting device, where CO-Duration=2240 is a value calculated from the indicated information, unit thereof is symbol, and converted time there of is 2.5ms.

For the beam identification (Beam-1), an indication of 0 represents that COT remain of a beam Beam-1 is 0 symbols; the same is true for a beam Beam-4.

For the beam identification (Beam-2), an indication of 1 represents that COT remain of Beam-1 is 2240 symbols, or a COT remaining duration is 2.5 ms; the same is true for Beam-3.

In addition, for a beam direction with an indication of 0 (i.e.: a beam direction whose COT remain is 0 symbols or whose LBT has failed), the receiving device may not detect a physical downlink control channel (Physical Downlink Control Channel, PDCCH) of a related beam direction, which can have an effect of power saving.

A further point 1: the aforementioned beam identification may also be replaced with a reference signal identification;

A further point 2: bit indication corresponding to the beam identification described above may also be multi-bit, for example, 2 bits are used, specifically, for example: a value of 00 indicates that related COT remaining time is not applied to the beam; a value of 01 indicates that one fourth of the related COT remaining time is applied to the beam; a value of 10 indicates that a half of the related COT remaining time is applied to the beam; a value of 11 indicates that all of the related COT remaining time is applied to the beam.

A further point 3: the beam information described above in the COT information may be an uplink beam or a downlink beam;

A further point 4: in the COT information, if the network device does not configured beam information, the terminal device may assume that the COT information is for all beam information configured for an indicated cell, or for part of the beam information configured for the cell (e.g.: a beam in uplink beams on which uplink data is scheduled with an indicated COT remaining duration, where the uplink data being scheduled includes uplink data scheduling configured by the higher level, or uplink data scheduled by dynamic signaling of the physical layer).

A further point 5: a corresponding relationship between "application indication" and "beam identification" in the COT information can be configured and indicated by higher level signaling. For example:

first "application indication" of the COT information, for a first beam identification configured by RRC (or a beam identification with a smallest identification number configured by the RRC);

second "application indication" of the COT information, for a second beam identification configured by the RRC (or a beam identification with a second smallest identification number configured by the RRC); and so on.

In some embodiments, the method further includes: receiving PUSCH scheduling information transmitted by the transmitting device; determining, according to the PUSCH scheduling information, one or more of the following: transmitting time of a PUSCH, beam information of the PUSCH, and a first LBT type of the PUSCH.

In the embodiments, the PUSCH scheduling information includes grant information for dynamic scheduling of the transmitting device or grant information of a higher level signaling configured grant.

In the embodiments, the following is further included: in a case that a first condition is satisfied, converting the first LBT type to a second LBT type; where the first condition includes one or more of the following: transmitting time of the PUSCH scheduling information is within an available duration range corresponding to the COT remaining duration information; beam information in the PUSCH scheduling information contains COT beam information; and the PUSCH scheduling information contains COT-related information.

Optionally, the second LBT type includes a LBT type-2 or a LBT type-3.

Optionally, the receiving device may apply a beam corresponding to PUSCH data. Specifically, it may be as follows:

Step 1: the receiving device may receive the PUSCH scheduling information transmitted by the transmitting device, and the PUSCH scheduling information may include grant information of uplink configuration grant (uplink granted, which may also be referred to as higher level signaling configuration grant) or grant information of dynamic scheduling of the transmitting device, and the grant information of the uplink configuration grant or the grant information of the dynamic scheduling may include: occurring time, transmission beam information (e.g., beam 1), and an LBT type (e.g., LBT type-1) of a PUSCH;

Step 2: the receiving device determines, according to the grant information of the uplink configuration grant or the grant information of the dynamic scheduling, the transmitting time of the PUSCH (for example, duration0);

Step 3: the receiving device receives COT information indicated by the transmitting device, and if time information indicated by the COT information contains time duration0, and the receiving device assumes that application beam information indicated in the COT information contains beam 1 (an indicating method may include implicit or explicit indication, or is applied by default to the uplink configuration grant/PUSCH transmission scheduled dynamically), then the receiving device converts the LBT type indicated in Step 1 to other LBT types, the specific indicating method is described in detail later), then the receiving device converts the LBT type indicated in Step 1 to other LBT types, and a specific type converted to may be determined by a protocol or configured through higher level signaling.

Optionally, when converting the LBT type indicated in Step 1 to other LBT types, the receiving device may convert the LBT type-1 to LBT type-2 or type-3, where the LBT type-2 may be that gNB/UE performs listening in slots to determine an occupy situation of a channel, and determines, according to a listening result, whether to transmit; and the LBT type-3 may be that the gNB/UE directly performs transmission without listening.

In the embodiments, the following is further included: in a case that receiving time of the COT information satisfies a second condition, converting the first LBT type to the second LBT type; where the second condition includes: the receiving time of the COT information is not earlier than receiving time of the PUSCH scheduling information, or the receiving time of the PUSCH scheduling information is not later than the receiving time of the COT information.

Optionally, the receiving device and/or the transmitting device may further constrain LBT type conversion:

if time when the receiving device receives the COT information is earlier (or not later) than time when the receiving device receives signaling used for indicating PUSCH transmission time, or if the time when the receiving device receives the signaling used for indicating the PUSCH transmission time is later (or not earlier) than the time when the receiving device receives the COT information, the receiving device may not perform a conversion of the LBT type (even if the time information indicated by the COT information contains the time duration0), i.e., the receiving device performs LBT according to the LBT type indicated by the receiving device before transmitting a PUSCH; and

if the time when the receiving device receives the COT information is not earlier (or later) than the time when the receiving device receives the signaling used for indicating the PUSCH transmission time, or if the time when the receiving device receives the signaling used for indicating the PUSCH transmission time is not later (or earlier) than the time when the receiving device receives the COT information, the receiving device performs the conversion of the LBT type.

In the embodiments, the beam information in the PUSCH scheduling information including the COT beam information or the PUSCH scheduling information including the COT-related information is determined in any one of following ways: configured via higher level signaling; indicated via DCI; the receiving device assumes that the beam information in the PUSCH scheduling information includes the COT beam information or the PUSCH scheduling information includes the COT-related information.

Optionally, in physical signaling indicating the COT information, a corresponding beam included may be implicitly indicated, i.e., beam application information is not included in the physical signaling indicating the COT information, and the receiving device and/or the transmitting device may determine the beam application information by any of following indicating methods:

A: determining, via a higher level signaling configuration, that the COT information is applied to one or more beams (for example, a beam corresponding to PUSCH data for uplink configuration grant transmission of the higher level signaling configuration and/or a beam corresponding to PUSCH data for dynamic scheduling; and/or, a beam corresponding to an uplink sounding signal of the higher level signaling configuration; and/or, a beam corresponding to an uplink control channel PUCCH of the higher level signaling configuration and/or the dynamic scheduling.

B: when receiving the COT information, the receiving device assumes that at least following beam information can be applied to the COT information:

the beam corresponding to the PUSCH data for the uplink configuration grant transmission of the higher level signaling configuration; and/or

the beam corresponding to the PUSCH data for the dynamic scheduling; and/or

the beam corresponding to the uplink probe signal of the higher level signaling configuration; and/or

the beam corresponding to the uplink control channel PUCCH of the higher level signaling configuration and/or the dynamic scheduling.

It should be noted that the beam information in the present disclosure may be indicated by a QCL type (quasi-colocation parameter (Quasi-Colocation)).

It should be understood that although steps in flowcharts of the aforementioned embodiment are shown sequentially as indicated by arrows, these steps are not necessarily executed sequentially in an order indicated by the arrows. Unless expressly stated herein, there is no strict order limitation on the execution of these steps, which may be executed in other orders. Moreover, at least a part of steps in the drawings may include a plurality of sub-steps or a plurality of phases, and these sub-steps or stages do not necessarily have to be completed at the same time, but may be executed at different times, and execution orders thereof are not necessarily sequential, but they may be executed in turn or alternately with at least a part of other steps or sub-steps or phases of the other steps.

In some embodiments, an apparatus for determining an available duration for data communication is provided, which is applied to a receiving device.

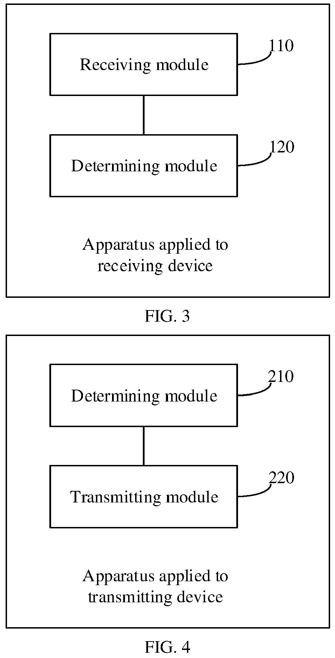

FIG. 3 is a schematic diagram of an apparatus for determining an available duration for data communication provided by an embodiment of the present disclosure, and as shown in FIG. 3, the apparatus includes:

a receiving module 110, configured to receive a first message, the first message including channel occupy time COT information of an unlicensed spectrum, and the COT information including COT remaining duration information and/or application beam indication information; and
a determining module 120, configured to determine, according to the COT remaining duration information, the available duration for data reception or transmission.

In some embodiments, the COT remaining duration information is less than or equal to a maximum indicated value, and the maximum indicated value being an indicated symbol value; and
the determining, according to the COT remaining duration information, the available duration for data reception or transmission includes:

determining, according to a conversion relationship between an indicated value and a COT remaining duration, a first COT remaining duration corresponding to the maximum indicated value; and
determining that the available duration for data reception or transmission is less than or equal to the first COT remaining duration.

In some embodiments, the maximum indicated value includes a maximum symbol value;

where in a case that a maximum SCS is 960 KHz, a maximum value of the maximum symbol value is 4480;
in a case that the maximum SCS is 480 KHz, the maximum value of the maximum symbol value is 2240; and
in a case that the maximum SCS is 120 KHz, the maximum value of the maximum symbol value is 560.

In some embodiments, the COT remaining duration information includes a first indicated value, the first indicated value including any one of an indicated symbol value, a symbol value contained in a half slot, or a symbol value contained in a slot;
the determining, according to the COT remaining duration information, the available duration for data reception or transmission includes:

determining, according to the first indicated value and a scale factor, a second indicated value;
determining, according to the second indicated value, and the conversion relationship between an indicated value and a COT remaining duration, a second COT remaining duration corresponding to the second indicated value; and
determining that the available duration for data reception or transmission is less than or equal to the second COT remaining duration.

In some embodiments, the determining, according to the first indicated value and the scale factor, the second indicated value includes:
determining a product of the first indicated value and the scale factor to be the second indicated value.

In some embodiments, in a case that the first indicated value is the indicated symbol value, the scale factor is determined according to a maximum COT length, a sub-carrier spacing SCS, a reference SCS index, and a reference maximum channel occupy time.

In some embodiments, the scale factor is calculated by a following formula:

$$scale\_factor = 2^{\mu-\mu 0} * \frac{T\max\_cot}{ref\_cot}$$

where *scale_factor* represents the scale factor, *T*max_cot represents the maximum COT length, $\mu$ represents the sub-carrier spacing SCS, $\mu 0$ represents the reference SCS index, and *ref*_cot represents the reference maximum channel occupy time.

In some embodiments, the scale factor is determined based on a preset rule;
the preset rules including that:

in a case that the first indicated value is the symbol value contained in the half slot, the scale factor is a first preset value; or,
in a case that the first indicated value is the symbol value contained in the slot, the scale factor is a second preset value;
where the second preset value is twice the second preset value.

In some embodiments, the following is further included:
determining, according to the application beam indication information, an applied beam corresponding to the COT remaining duration information.
In some embodiments, the application beam indication information includes beam information and a beam number, the beam information and the beam number being configured by the receiving device, the following is further included:

if an indicated value corresponding to a target beam is a first value, determining that the COT remaining duration information is not applied to the target beam; and
if the indicated value corresponding to the target beam is a second value, determining that the COT remaining duration information is applied to the target beam.

In some embodiments, the following is further included:

receiving PUSCH scheduling information transmitted by a transmitting device;
determining, according to the PUSCH scheduling information, one or more of the following:
transmitting time of a PUSCH, beam information of the PUSCH, and a first LBT type of the PUSCH.

In some embodiments, the PUSCH scheduling information includes grant information for dynamic scheduling of the transmitting device and/or grant information of a higher level signaling configured grant.
In some embodiments, converting a first LBT type to a second LBT type further includes:

in a case that a first condition is satisfied, converting the first LBT type to the second LBT type;
where the first condition includes one or more of the following:

transmitting time of the PUSCH scheduling information is within an available duration range corresponding to the COT remaining duration information;
beam information in the PUSCH scheduling information contains COT beam information; and
the PUSCH scheduling information contains COT-related information.

In some embodiments, the beam information in the PUSCH scheduling information including the COT beam information or the PUSCH scheduling information including the COT-related information is determined in any one of following ways:

configured via higher level signaling;
indicated via DCI; and
the receiving device assumes that the beam information in the PUSCH scheduling information includes the COT beam information or the PUSCH scheduling information includes the COT-related information.

In some embodiments, the second LBT type includes a LBT type-2 or a LBT type-3.
In some embodiments, the following is further included:
in a case that receiving time of the COT information satisfies a second condition, converting the first LBT type to the second LBT type; wherein the second condition includes: the receiving time of the COT information is not earlier than receiving time of the PUSCH scheduling information, or the receiving time of the PUSCH scheduling information is not later than the receiving time of the COT information.

In some embodiments, an apparatus for determining an available duration for data communication is provided, which is applied to a transmitting device.

FIG. 4 is a schematic diagram of an apparatus for determining an available duration for data communication provided by an embodiment of the present disclosure, and as shown in FIG. 4, the apparatus includes:

a determining module 210, configured to determine channel occupy time COT information of an unlicensed spectrum, the COT information including COT remaining duration information and/or application beam indication information; and
a transmitting module 220, configured to transmit a first message containing the COT information to a receiving device.

In some embodiments, the COT remaining duration information is less than or equal to a maximum indicated value, the maximum indicated value being an indicated symbol value; and
the maximum indicated value is determined according to a maximum COT length and a sub-carrier spacing SCS.

In some embodiments, the maximum indicated value is further determined according to a reference maximum indicated range, a reference SCS index, and a reference maximum channel occupy time.

In some embodiments, the maximum indicated value is calculated by a following formula:

$$Max_{value} = ref\_max\_value * 2^{\mu-\mu0} * \frac{T\max\_cot}{ref\_cot}$$

where $Max_{value}$ represents the maximum indicated value, $T\max\_cot$ represents the maximum COT length, $\mu$ represents the sub-carrier spacing SCS, $ref\_max\_value$ represents the reference maximum indicated range, $\mu0$ represents the reference SCS index, and $ref\_cot$ represents the reference maximum channel occupy time.

In some embodiments, the maximum indicated value is further determined according to a number of slots contained in each subframe and a number of symbols contained in one slot.

In some embodiments, the maximum indicated value is calculated by a following formula:

$$Max_{value} = N_{slot}^{subframe,\mu} * T\max\_cot * N_{symb}^{slot}$$

where $Max_{value}$ represents the maximum indicated value, $T\max\_cot$ represents the maximum COT length, $\mu$ represents the sub-carrier spacing SCS, $N_{slot}^{subframe,\mu}$ represents the number of slots contained in each subframe, and $N_{symb}^{slot}$ represents the number of symbols contained in one slot.

In some embodiments, the COT remaining duration information includes a first indicated value; and
the first indicated value includes any one of an indicated symbol value, a symbol value contained in a half slot, or a symbol value contained in a slot.

In some embodiments, the maximum indicated value includes a maximum symbol value;

where in a case that a maximum SCS is 960 KHz, a maximum value of the maximum symbol value is 4480;
in a case that the maximum SCS is 480 KHz, the maximum value of the maximum symbol value is 2240; and
in a case that the maximum SCS is 120 KHz, the maximum value of the maximum symbol value is 560.

In some embodiments, the following is further included:
transmitting PUSCH scheduling information to the receiving device, where the PUSCH scheduling information is used for instructing the receiving device to determine, according to the PUSCH scheduling information, one or more of the following: transmitting time of a PUSCH, beam information of the PUSCH, and a first LBT type of the PUSCH.

In some embodiments, the PUSCH scheduling information includes grant information for dynamic scheduling of the transmitting device and/or grant information of a higher level signaling configured grant.

A specific limitation of the apparatus for determining the available duration for data communication can be found in the above limitation of the method for determining the available duration for data communication, which will not be repeated herein. Various modules of the aforementioned apparatus for determining the available duration for data communication may be implemented in whole or in part by software, hardware and combinations thereof. Each of the aforementioned modules may be embedded in or independent from a processor in a computer device in a form of hardware, or may be stored in a memory in the computer device in a form of software so as to be called by the processor to execute operations corresponding to the above modules.

In some embodiments, a receiving device is provided.

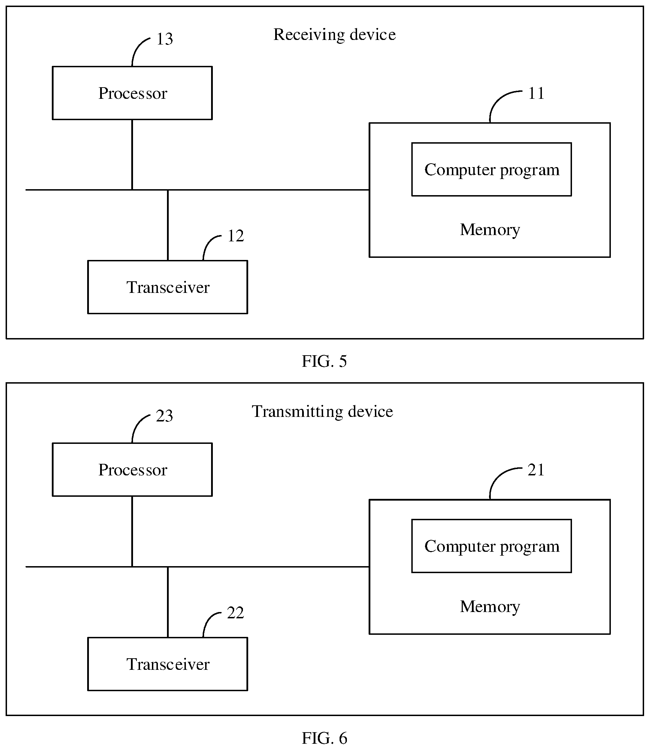

FIG. 5 is a structural diagram of a receiving device provided by an embodiment of the present disclosure, and as shown in FIG. 5, the receiving device includes a memory 11, a transceiver 12, and a processor 13.

The memory is configured to store a computer program; the transceiver is configured to transmit and receive data under control of the processor; and the processor is configured to read the computer program in the memory and execute following operations:

receiving a first message, the first message including channel occupy time COT information of an unlicensed spectrum, and the COT information including COT remaining duration information and/or application beam indication information; and

determining, according to the COT remaining duration information, the available duration for data reception or transmission.

In some embodiments, the COT remaining duration information is less than or equal to a maximum indicated value, and the maximum indicated value being an indicated symbol value; and

the determining, according to the COT remaining duration information, the available duration for data reception or transmission includes:

determining, according to a conversion relationship between an indicated value and a COT remaining duration, a first COT remaining duration corresponding to the maximum indicated value; and

determining that the available duration for data reception or transmission is less than or equal to the first COT remaining duration.

In some embodiments, the maximum indicated value includes a maximum symbol value;

where in a case that a maximum SCS is 960 KHz, a maximum value of the maximum symbol value is 4480;
in a case that the maximum SCS is 480 KHz, the maximum value of the maximum symbol value is 2240; and
in a case that the maximum SCS is 120 KHz, the maximum value of the maximum symbol value is 560.

In some embodiments, the COT remaining duration information includes a first indicated value, the first indicated value including any one of an indicated symbol value, a symbol value contained in a half slot, or a symbol value contained in a slot;

the determining, according to the COT remaining duration information, the available duration for data reception or transmission includes:

determining, according to the first indicated value and a scale factor, a second indicated value;
determining, according to the second indicated value, and a conversion relationship between an indicated value and a COT remaining duration, a second COT remaining duration corresponding to the second indicated value; and
determining that the available duration for data reception or transmission is less than or equal to the second COT remaining duration.

In some embodiments, the determining, according to the first indicated value and the scale factor, the second indicated value includes:

determining a product of the first indicated value and the scale factor to be the second indicated value.

In some embodiments, in a case that the first indicated value is the indicated symbol value, the scale factor is determined according to a maximum COT length, a sub-carrier spacing SCS, a reference SCS index, and a reference maximum channel occupy time.

In some embodiments, the scale factor is calculated by a following formula:

$$scale\_factor = 2^{\mu - \mu 0} * \frac{T\max\_\cot}{ref\_\cot}$$

where *scale_factor* represents the scale factor, $T\max\_\cot$ represents the maximum COT length, $\mu$ represents the sub-carrier spacing SCS, $\mu 0$ represents the reference SCS index, and *ref_cot* represents the reference maximum channel occupy time.

In some embodiments, the scale factor is determined based on a preset rule;
the preset rules including that:

in a case that the first indicated value is the symbol value contained in the half slot, the scale factor is a first preset value; or,
in a case that the first indicated value is the symbol value contained in the slot, the scale factor is a second preset value; where the second preset value is twice the second preset value.

In some embodiments, the following is further included:
determining, according to the application beam indication information, an applied beam corresponding to the COT remaining duration information.
In some embodiments, the application beam indication information includes beam information and a beam number, the beam information and the beam number being configured by the receiving device, the following is further included:

if an indicated value corresponding to a target beam is a first value, determining that the COT remaining duration information is not applied to the target beam; and
if the indicated value corresponding to the target beam is a second value, determining that the COT remaining duration information is applied to the target beam.

In some embodiments, the following is further included:

receiving PUSCH scheduling information transmitted by a transmitting device;
determining, according to the PUSCH scheduling information, one or more of the following:
transmitting time of a PUSCH, beam information of the PUSCH, and a first LBT type of the PUSCH.

In some embodiments, the PUSCH scheduling information includes grant information for dynamic scheduling of the transmitting device and/or grant information of a higher level signaling configured grant.
In some embodiments, the following is further included:

in a case that a first condition is satisfied, converting the first LBT type to a second LBT type;
where the first condition includes one or more of the following:

transmitting time of the PUSCH scheduling information is within an available duration range corresponding to the COT remaining duration information;
beam information in the PUSCH scheduling information contains COT beam information; and
the PUSCH scheduling information contains COT-related information.

In some embodiments, the beam information in the PUSCH scheduling information including the COT beam information or the PUSCH scheduling information including the COT-related information is determined in any one of following ways:

configured via higher level signaling;
indicated via DCI; and
the receiving device assumes that the beam information in the PUSCH scheduling information includes the COT beam information or the PUSCH scheduling information includes the COT-related information.

In some embodiments, the second LBT type includes a LBT type-2 or a LBT type-3.
In some embodiments, the following is further included:
in a case that receiving time of the COT information satisfies a second condition, converting the first LBT type to the second LBT type; wherein the second condition includes: the receiving time of the COT information is not earlier than receiving time of the PUSCH scheduling information, or the receiving time of the PUSCH scheduling information is not later than the receiving time of the COT information.
In some embodiments, a transmitting device is provided.
FIG. 6 is a structural diagram of a transmitting device provided by an embodiment of the present disclosure, and as shown in FIG. 6, the transmitting device includes a memory 21, a transceiver 22, and a processor 23.
The memory is configured to store a computer program; the transceiver is configured to transmit and receive data under control of the processor; and the processor is configured to read the computer program in the memory and execute following operations:

determining channel occupy time COT information of an unlicensed spectrum, the COT information including COT remaining duration information and/or application beam indication information; and
transmitting a first message containing the COT information to a receiving device.

In some embodiments, the application beam indication information includes beam information and a beam number, the beam information and the beam number being configured by the transmitting device, and the following is further included:

if an indicated value corresponding to a target beam is a first value, determining that the COT remaining duration information is not applied to the target beam; and
if the indicated value corresponding to the target beam is a second value, determining that the COT remaining duration information is applied to the target beam.

In some embodiments, the COT remaining duration information is less than or equal to a maximum indicated value, the maximum indicated value being an indicated symbol value; and
the maximum indicated value is determined according to a maximum COT length and a sub-carrier spacing SCS.
In some embodiments, the maximum indicated value is further determined according to a reference maximum indicated range, a reference SCS index, and a reference maximum channel occupy time.
In some embodiments, the maximum indicated value is calculated by a following formula:

$$Max_{value} = \mathrm{re}f\_\max\_value * 2^{\mu-\mu 0} * \frac{T\max\_\cot}{ref\_\cot}$$

where $Max_{value}$ represents the maximum indicated value, $T\max\_\cot$ represents the maximum COT length, $\mu$ represents the sub-carrier spacing SCS, $ref\_max\_value$ represents the reference maximum indicated range, $\mu 0$ represents the reference SCS index, and $ref\_\cot$ represents the reference maximum channel occupy time.
In some embodiments, the maximum indicated value is further determined according to a number of slots contained in each subframe and a number of symbols contained in one slot.
In some embodiments, the maximum indicated value is calculated by a following formula:

$$Max_{value} = N_{slot}^{subframe,\mu} * T\max\_\cot * N_{symb}^{slot}$$

where $Max_{value}$ represents the maximum indicated value, $T\max\_\cot$ represents the maximum COT length, $\mu$ represents the sub-carrier spacing SCS, $N_{slot}^{subframe,\mu}$ represents the number of slots contained in each subframe, and $N_{symb}^{slot}$ represents the number of symbols contained in one slot.
In some embodiments, the COT remaining duration information includes a first indicated value; and
the first indicated value includes any one of an indicated symbol value, a symbol value contained in a half slot, or a symbol value contained in a slot.
In some embodiments, the maximum indicated value includes a maximum symbol value;

where in a case that a maximum SCS is 960 KHz, a maximum value of the maximum symbol value is 4480;
in a case that the maximum SCS is 480 KHz, the maximum value of the maximum symbol value is 2240; and
in a case that the maximum SCS is 120 KHz, the maximum value of the maximum symbol value is 560.

In some embodiments, the following is further included: transmitting PUSCH scheduling information to the receiving device, where the PUSCH scheduling information is used for instructing the receiving device to determine, according to the PUSCH scheduling information, one or more of the following: transmitting time of a PUSCH, beam information of the PUSCH, and a first LBT type of the PUSCH.
In some embodiments, the PUSCH scheduling information includes grant information for dynamic scheduling of the transmitting device and/or grant information of a higher level signaling configured grant.
In the aforementioned devices, the memory and the processor are directly or indirectly electrically connected to each other for a purpose of transmission or interaction of data. For example, these elements may be electrically connected to each other via one or more communication buses or signal lines, e.g., they may be connected via a bus. The memory stores an computer executable instruction for implementing the data access control method, and includes at least one software function module which may be stored in the memory in a form of software or firmware, and the processor executes various functional applications as well as data processing by running a software program as well as a module stored in the memory.

The memory may be, but is not limited to, a random access memory (Random Access Memory, RAM), a read only memory (Read Only Memory, ROM), a programmable read-only memory (Programmable Read-Only Memory, PROM), an erasable read-only memory (Erasable Programmable Read-Only Memory, EPROM), an electric erasable read-only memory (Electric Erasable Programmable Read-Only Memory, EEPROM), etc. The memory is configured to store a program and the processor executes the program after receiving an execution instruction. Further, the software program as well as the module in the aforementioned memory may further include an operating system, which may include various software components and/or drivers for managing system tasks (e.g., memory management, storage device control, power management, etc.) and may be in mutual communication with various hardware or software components so as to provide an operating environment for other software components.

The processor may be an integrated circuit chip with signal processing capabilities. The aforementioned processor may be a general purpose processor, including a central processing unit (Central Processing Unit, CPU), a network processor (Network Processor, NP), etc. Various disclosed methods, steps, and logical block diagrams in the embodiments of the present disclosure may be implemented or executed. The general purpose processor may be a microprocessor or the processor may also be any conventional processor, etc.

In some embodiments, a computer readable storage medium is provided, and the computer readable storage medium store a computer executable instruction, which when being executed by a processor, is used for implementing the steps of various method embodiments in the present disclosure.

In some embodiments, a computer program product is provided, including a computer program, which when being executed by a processor, is used for implementing the steps of various method embodiments in the present disclosure.

A person of ordinary skill in the art can understand that implementing all or part of the processes in the methods of the aforementioned embodiments may be accomplished by instructing related hardware by means of a computer program, the computer program may be stored in a non-volatile computer readable storage medium, and when being executed, the computer program may include the processes of the aforementioned method embodiments. Any reference to a memory, storage, a database, or other media used in the embodiments provided in the present disclosure may include non-volatile and/or volatile memory. The non-volatile memory may include a read only memory (ROM), a programmable ROM (PROM), an electrically programmable ROM (EPROM), an electrically erasable programmable ROM (EEPROM), or a flash memory. The volatile memory may include a random access memory (RAM) or an external cache memory. By way of illustration and not limitation, RAM is available in a variety of forms, for example, a static RAM (SRAM), a dynamic RAM (DRAM), a synchronous DRAM (SDRAM), a dual data rate SDRAM (DDRSDRAM), an enhanced SDRAM (ESDRAM), a synchlink (Synchlink) DRAM (SLDRAM), a rambus (Rambus) direct RAM (RDRAM), a direct rambus dynamic RAM (DRDRAM), and a rambus dynamic RAM (RDRAM).

Other implementation solutions of the present disclosure will easily come to mind to those skilled in the art upon consideration of the specification and practice of the application disclosed herein. The present disclosure is intended to cover any variations, uses, or adaptive modifications of the present disclosure which follow general principles of the present disclosure and include common knowledge or customary technical means in the present technical field which are not disclosed in the present disclosure. The specification and the embodiments are to be regarded as exemplary only, and the true scope and spirit of the present disclosure is indicated by following claims.

It should be understood that the present disclosure is not limited to a precise structure which has been described above and shown in the drawings, and that various modifications and changes may be made without departing from scope thereof. The scope of the present disclosure is limited only by the appended claims.

**Claims**

1. A method for determining an available duration for data communication, applied to a receiving device, **characterized by** comprising:

   receiving a first message, the first message comprising channel occupy time COT information of an unlicensed spectrum, and the COT information comprising COT remaining duration information and/or application beam indication information; and
   determining, according to the COT remaining duration information, the available duration for data reception or transmission.

2. The method according to claim 1, **characterized in that** the COT remaining duration information is less than or equal to a maximum indicated value, and the maximum indicated value being an indicated symbol value; and
the determining, according to the COT remaining duration information, the available duration for data reception or transmission comprises:

   determining, according to a conversion relationship between an indicated value and a COT remaining duration, a first COT remaining duration corresponding to the maximum indicated value; and
   determining that the available duration for data reception or transmission is less than or equal to the first COT remaining duration.

3. The method according to claim 2, **characterized in that** the maximum indicated value comprises a maximum symbol value;

   wherein in a case that a maximum SCS is 960 KHz, a maximum value of the maximum symbol value is 4480;
   in a case that the maximum SCS is 480 KHz, the maximum value of the maximum symbol value is 2240; and
   in a case that the maximum SCS is 120 KHz, the maximum value of the maximum symbol value is 560.

4. The method according to claim 1, **characterized in that** the COT remaining duration information comprises a first indicated value; and the first indicated value comprises any one of an indicated symbol value, a symbol value contained in a half slot, or a symbol value contained in a slot;
the determining, according to the COT remaining duration information, the available duration for data reception or transmission comprises:

   determining, according to the first indicated value and a scale factor, a second indicated value;
   determining, according to the second indicated value, and a conversion relationship between an indicated value and a COT remaining duration, a second COT remaining duration corresponding to the second indicated value; and
   determining that the available duration for data reception or transmission is less than or equal to the second COT remaining duration.

5. The method according to claim 4, **characterized in that** the determining, according to the first indicated value and the scale factor, the second indicated value comprises:
determining a product of the first indicated value and the scale factor to be the second indicated value.

6. The method according to claim 4, **characterized in that** in a case that the first indicated value is the indicated symbol value, the scale factor is determined according to a maximum COT length, a sub-carrier spacing SCS, a reference SCS index, and a reference maximum channel occupy time.

7. The method according to claim 6, **characterized in that** the scale factor is calculated by a following formula:

$$scale\_factor = 2^{\mu - \mu 0} * \frac{T \max\_\cot}{ref\_\cot}$$

wherein *scale\_factor* represents the scale factor, $T\max\_\cot$ represents the maximum COT length, $\mu$ represents the sub-carrier spacing SCS, $\mu 0$ represents the reference SCS index, and *ref\_*cot represents the reference maximum channel occupy time.

8. The method according to claim 4, **characterized in that** the scale factor is determined based on a preset rule; and the preset rules comprises that:

   in a case that the first indicated value is the symbol value contained in the half slot, the scale factor is a first preset value; or,
   in a case that the first indicated value is the symbol value contained in the slot, the scale factor is a second preset value;
   wherein the second preset value is twice the second preset value.

9. The method according to any one of claims 1 to 8, **characterized by** further comprising:

determining, according to the application beam indication information, an applied beam corresponding to the COT remaining duration information.

10. The method according to claim 9, **characterized in that** the application beam indication information comprises beam information and a beam number, the beam information and the beam number being configured by the receiving device, the following is further comprised:

> if an indication value corresponding to a target beam is a first value, determining that the COT remaining duration information is not applied to the target beam; and
> if the indicated value corresponding to the target beam is a second value, determining that the COT remaining duration information is applied to the target beam.

11. The method according to any one of claims 1 to 8, **characterized by** further comprising:

> receiving PUSCH scheduling information transmitted by a transmitting device;
> determining, according to the PUSCH scheduling information, one or more of the following:
> transmitting time of a PUSCH, beam information of the PUSCH, and a first LBT type of the PUSCH.

12. The method according to claim 11, **characterized in that** the PUSCH scheduling information comprises grant information for dynamic scheduling of the transmitting device and/or grant information of a higher level signaling configured grant.

13. The method according to claim 11 or 12, **characterized by** further comprising:

> in a case that a first condition is satisfied, converting the first LBT type to a second LBT type;
> wherein the first condition comprises one or more of the following:
>
>> transmitting time of the PUSCH scheduling information is within an available duration range corresponding to the COT remaining duration information;
>> beam information in the PUSCH scheduling information contains COT beam information; and
>> the PUSCH scheduling information contains COT-related information.

14. The method according to claim 13, **characterized in that** the beam information in the PUSCH scheduling information comprising the COT beam information or the PUSCH scheduling information comprising the COT-related information is determined in any one of following ways:

> configured via higher level signaling;
> indicated via DCI; and
> the receiving device assumes that the beam information in the PUSCH scheduling information comprises the COT beam information or the PUSCH scheduling information comprises the COT-related information.

15. The method according to claim 13, **characterized in that** the second LBT type comprises a LBT type-2 or a LBT type-3.

16. The method according to claim 11, **characterized by** further comprising:
in a case that receiving time of the COT information satisfies a second condition, converting the first LBT type to a second LBT type; wherein the second condition comprises: the receiving time of the COT information is not earlier than receiving time of the PUSCH scheduling information, or the receiving time of the PUSCH scheduling information is not later than the receiving time of the COT information.

17. A method for determining an available duration for data communication, applied to a transmitting device, **characterized by** comprising:

> determining channel occupy time COT information of an unlicensed spectrum, the COT information comprising COT remaining duration information and/or application beam indication information; and
> transmitting a first message containing the COT information to a receiving device.

18. The method according to claim 17, wherein the application beam indication information comprises beam information and a beam number, the beam information and the beam number being configured by the transmitting device, the following is further comprised:

if an indication value corresponding to a target beam is a first value, determining that the COT remaining duration information is not applied to the target beam; and
if the indicated value corresponding to the target beam is a second value, determining that the COT remaining duration information is applied to the target beam.

19. The method according to claim 17, **characterized in that** the COT remaining duration information is less than or equal to a maximum indicated value, the maximum indicated value being an indicated symbol value; and
the maximum indicated value is determined according to a maximum COT length and a sub-carrier spacing SCS.

20. The method according to claim 19, **characterized in that** the maximum indicated value is further determined according to a reference maximum indicated range, a reference SCS index, and a reference maximum channel occupy time.

21. The method according to claim 20, **characterized in that** the maximum indicated value is calculated by a following formula:

$$Max_{value} = ref\_\max\_value * 2^{\mu-\mu0} * \frac{T\max\_cot}{ref\_cot}$$

wherein $Max_{value}$ represents the maximum indicated value, $T\max\_cot$ represents the maximum COT length, $\mu$ represents the sub-carrier spacing SCS, $ref\_max\_value$ represents the reference maximum indicated range, $\mu0$ represents the reference SCS index, and $ref\_cot$ represents the reference maximum channel occupy time.

22. The method according to claim 20, **characterized in that** the maximum indicated value is further determined according to a number of slots contained in each subframe and a number of symbols contained in one slot.

23. The method according to claim 22, **characterized in that** the maximum indicated value is calculated by a following formula:

$$Max_{value} = N_{slot}^{subframe,\mu} * T\max\_cot * N_{symb}^{slot}$$

wherein $Max_{value}$ represents the maximum indicated value, $T\max\_cot$ represents the maximum COT length, $\mu$ represents the sub-carrier spacing SCS, $N_{slot}^{subframe,\mu}$ represents the number of slots contained in each subframe, and $N_{symb}^{slot}$ represents the number of symbols contained in one slot.

24. The method according to claim 17, **characterized in that** the COT remaining duration information comprises a first indicated value;
the first indicated value comprises any one of an indicated symbol value, a symbol value contained in a half slot, or a symbol value contained in a slot;

25. The method according to any one of claims 19 to 23, **characterized in that** the maximum indicated value comprises a maximum symbol value;

wherein in a case that a maximum SCS is 960 KHz, a maximum value of the maximum symbol value is 4480;
in a case that the maximum SCS is 480 KHz, the maximum value of the maximum symbol value is 2240; and
in a case that the maximum SCS is 120 KHz, the maximum value of the maximum symbol value is 560.

26. The method according to any one of claims 17 to 24, **characterized by** further comprising:
transmitting PUSCH scheduling information to the receiving device, wherein the PUSCH scheduling information is used for instructing the receiving device to determine, according to the PUSCH scheduling information, one or more of the following: transmitting time of a PUSCH, beam information of the PUSCH, and a first LBT type of the PUSCH.

27. The method according to claim 26, **characterized in that** the PUSCH scheduling information comprises grant information for dynamic scheduling of the transmitting device and/or grant information of a higher level signaling configured grant.

28. A receiving device, **characterized by** comprising a memory, a transceiver, and a processor:
the memory is configured to store a computer program; the transceiver is configured to transmit and receive data under control of the processor; and the processor is configured to read the computer program in the memory and execute following operations:

receiving a first message, the first message comprising channel occupy time COT information of an unlicensed spectrum, and the COT information comprising COT remaining duration information and/or application beam indication information; and
determining, according to the COT remaining duration information, the available duration for data reception or transmission.

29. A transmitting device, **characterized by** comprising a memory, a transceiver, and a processor:
the memory is configured to store a computer program; the transceiver is configured to transmit and receive data under control of the processor; and the processor is configured to read the computer program in the memory and execute following operations:

determining channel occupy time COT information of an unlicensed spectrum, the COT information comprising COT remaining duration information and/or application beam indication information; and
transmitting a first message containing the COT information to a receiving device.

30. An apparatus for determining an available duration for data communication, applied to a receiving device, **characterized by** comprising:

a receiving module, configured to receive a first message, the first message comprising channel occupy time COT information of an unlicensed spectrum, and the COT information comprising COT remaining duration information and/or application beam indication information; and
a determining module, configured to determine, according to the COT remaining duration information, the available duration for data reception or transmission.

31. An apparatus for determining an available duration for data communication, applied to a transmitting device, **characterized by** comprising:

a determining module, configured to determine channel occupy time COT information of an unlicensed spectrum, the COT information comprising COT remaining duration information and/or application beam indication information; and
a transmitting module, configured to transmit a first message containing the COT information to a receiving device.

32. A processor readable storage medium storing a computer program, **characterized in that** the computer program is used for causing the processor to execute the method according to any one of claims 1 to 27.

Determining channel occupy time COT information of an unlicensed spectrum, where the COT information includes COT remaining duration information and/or application beam indication information

S110

Transmitting a first message containing the COT information to a receiving device

S120

FIG. 1

Receiving a first message transmitted by a transmitting device, the first message including channel occupy time COT information of an unlicensed spectrum, and the COT information including COT remaining duration information and/or application beam indication information

S210

Determining, according to the COT remaining duration information, the available duration for data reception or transmission

S220

FIG. 2

FIG. 3

FIG. 4

Receiving device

13

Processor

11

Computer program

Memory

12

Transceiver

FIG. 5

Transmitting device

23

Processor

21

Computer program

Memory

22

Transceiver

FIG. 6

<table>
<tr><td colspan="2">**INTERNATIONAL SEARCH REPORT**</td><td>International application No.<br><br>**PCT/CN2022/138184**</td></tr>
</table>

**A.     CLASSIFICATION OF SUBJECT MATTER**

H04W 74/08(2009.01)i

According to International Patent Classification (IPC) or to both national classification and IPC

**B.     FIELDS SEARCHED**

Minimum documentation searched (classification system followed by classification symbols)

H04W, H04L, H04M, H04Q

Documentation searched other than minimum documentation to the extent that such documents are included in the fields searched

Electronic data base consulted during the international search (name of data base and, where practicable, search terms used)

CNTXT, CNKI, 3GPP, WPABSC, ENTXTC: 非授权频谱, 信道占有时间, 信道占用时间, 剩余, 可用, 时间, 时长, 波, unlicensed, spectrum, COT, channel, occupy, time, surplus, available, usable, time, wave

**C.     DOCUMENTS CONSIDERED TO BE RELEVANT**

| Category* | Citation of document, with indication, where appropriate, of the relevant passages | Relevant to claim No. |
|---|---|---|
| A | CN 111970706 A (GUANGDONG OPPO MOBILE COMMUNICATIONS CORP., LTD.) 20 November 2020 (2020-11-20)<br>description, paragraphs 6-100, and figures 1-17 | 1-32 |
| A | CN 110521273 A (BEIJING XIAOMI MOBILE SOFTWARE CO., LTD.) 29 November 2019 (2019-11-29)<br>entire document | 1-32 |
| A | CN 110463280 A (XIAOMI COMMUNICATION CO., LTD.) 15 November 2019 (2019-11-15)<br>entire document | 1-32 |
| A | CN 111181663 A (PUTIAN INFORMATION TECHNOLOGY INSTITUTE CO., LTD.) 19 May 2020 (2020-05-19)<br>entire document | 1-32 |
| A | EP 3637937 A1 (SONY CORP.) 15 April 2020 (2020-04-15)<br>entire document | 1-32 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 February 2023** | **10 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/138184**

| Patent document cited in search report | | | Publication date (day/month/year) | Patent family member(s) | | | Publication date (day/month/year) |
|---|---|---|---|---|---|---|---|
| CN | 111970706 | A | 20 November 2020 | None | | | |
| CN | 110521273 | A | 29 November 2019 | EP | 3998833 | A1 | 18 May 2022 |
| | | | | WO | 2021003746 | A1 | 14 January 2021 |
| | | | | BR | 112022000272 | A2 | 22 February 2022 |
| | | | | US | 2022278725 | A1 | 01 September 2022 |
| | | | | JP | 2022540181 | A | 14 September 2022 |
| | | | | KR | 20220034824 | A | 18 March 2022 |
| CN | 110463280 | A | 15 November 2019 | WO | 2020248133 | A1 | 17 December 2020 |
| CN | 111181663 | A | 19 May 2020 | None | | | |
| EP | 3637937 | A1 | 15 April 2020 | EP | 3637937 | A4 | 16 September 2020 |
| | | | | WO | 2019001160 | A1 | 03 January 2019 |
| | | | | US | 2020037366 | A1 | 30 January 2020 |
| | | | | US | 11490423 | B2 | 01 November 2022 |
| | | | | JP | 2020526078 | A | 27 August 2020 |
| | | | | KR | 20200020679 | A | 26 February 2020 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022100238137
- CN 2022108262543
- CN 2022109347943